(19) Europäisches Patentamt
European Patent Office
Office européen des brevets

(11) Publication number: 0 134 252 B1

(12) EUROPEAN PATENT SPECIFICATION

(45) Date of publication of patent specification: 19.08.87

(51) Int. Cl.[4]: C 08 L 79/08, C 08 L 81/02, C 08 L 81/04

(21) Application number: 83106953.9

(22) Date of filing: 15.07.83

(54) **Polyetherimide-polysulfide blends.**

(43) Date of publication of application:
20.03.85 Bulletin 85/12

(45) Publication of the grant of the patent:
19.08.87 Bulletin 87/34

(84) Designated Contracting States:
DE FR GB IT NL

(58) References cited:
US-A-4 017 555

(73) Proprietor: GENERAL ELECTRIC COMPANY
1 River Road
Schenectady New York 12305 (US)

(72) Inventor: Giles, Harold Frazee, Jr.
Wilshire Drive
Cheshire Massachusetts 01225 (US)

(74) Representative: Catherine, Alain
General Electric - Deutschland Munich Patent
Operation Frauenstrasse 32
D-8000 München 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 134 252 B1

**Description**

This invention relates to a class of polyetherimide-polysulfide blends. The blends have good flexural strength regardless of the relative proportions of the components of the blend and have generally higher mechanical properties than those associated with the polysulfide component of the blends.

The blends of the invention include 90 to 10% by weight of a polyetherimide of the formula:

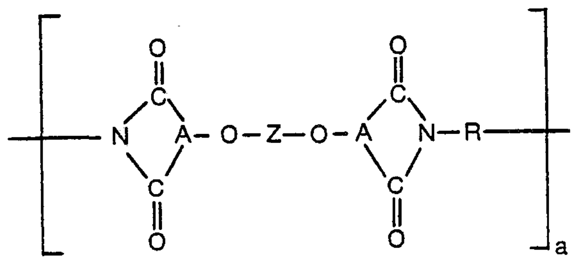

where a represents a whole number in excess of 1, e.g., 10 to 10,000 or more, the group

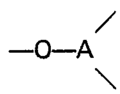

is selected from:

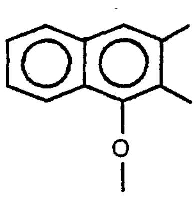

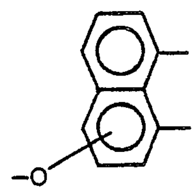

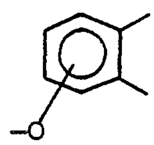

preferably a polyetherimide including in the latter

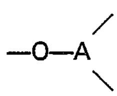

group where R′ is hydrogen such that the polyetherimide is of the formula:

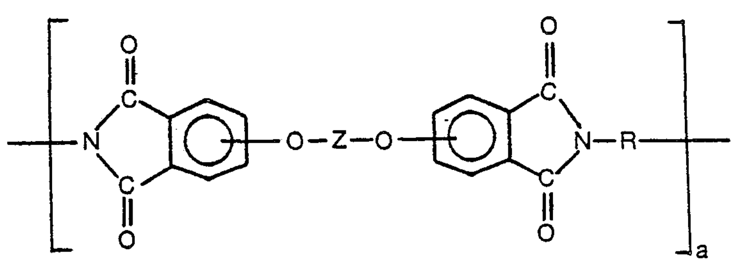

and the divalent bonds of the —Z—O-radical are in the 3,3′; 3,4′; 4,3′ or the 4,4′ position; Z is a member of the class consisting of (1)

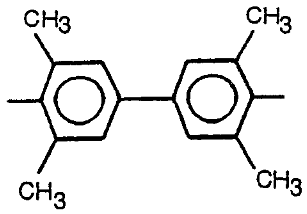 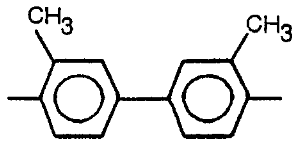 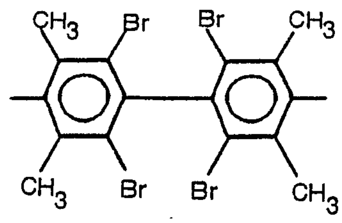

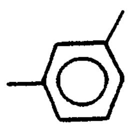 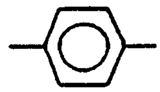 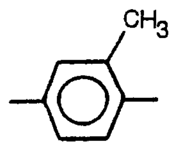 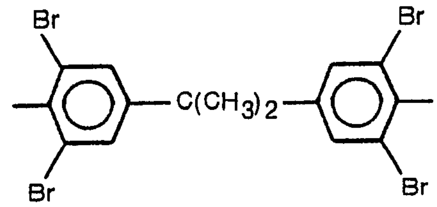

and (2) divalent organic radicals of the general formula:

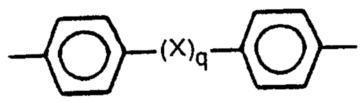

where X is a member selected from the class consisting of divalent radicals of the formulas,

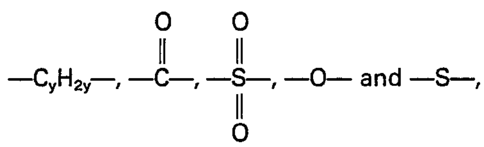

where q is 0 or 1, y is a whole number from 1 to 5, and R is a divalent organic radical selected from the class consisting of (a) aromatic hydrocarbon radicals having from 6—20 carbon atoms and halogenated derivatives thereof, (b) alkylene radicals and cycloalkylene radicals having from 2—20 carbon atoms, $C_{(2-8)}$ alkylene terminated polydiorganosiloxane, and (c) divalent radicals included by the formula:

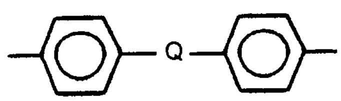

where Q is a member selected from the class consisting of:

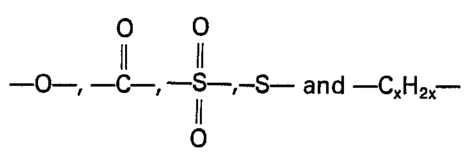

where x is a whole number from 1 to 5 inclusive. Particularly preferred polyetherimides for the purposes of the present invention include those where

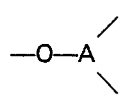

and Z respectively are:

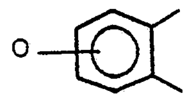 and 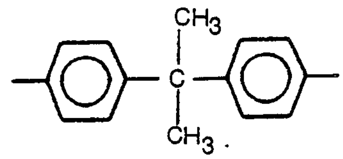

and R is selected from:

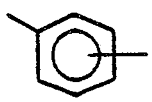 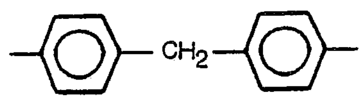 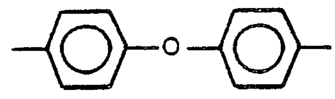

The polyetherimides where R is metaphenylene are most preferred.

The polyetherimide-polysulfide blends of the invention also include 90 to 10% by weight of a polysulfide which is a polymer composed substantially of linear molecules of moderate molecular weight having repeating units of the structural formula:

$$-[R_1-S_n]-$$

where $R_1$ is a divalent aliphatic or aromatic radical and n is a number from 1 to 5, generally about one. Preferably, $R_1$ is aromatic such as phenylene, biphenylene, naphthylene, oxydiphenyl or lower alkyl, lower alkoxy or halogen substituted derivatives thereof, the lower alkyl substituents having one to six carbon atoms such as methyl, propyl, isobutyl, n-hexyl and the like and n is one. Generally, the aromatic polysulfide polymer will have an inherent viscosity within the range of 0.05 to 0.4, preferably 0.1 to 0.35, determined at 206°C. in 1-chloronaphthalene at a polymer concentration of 0.4 g/ 100 ml solution.

A particularly preferred polysulfide is a polyphenylene sulfide such as that sold under the tradename Ryton® by Phillips Petroleum Company, Bartlesville, Oklahoma and having repeating units of the structural formula:

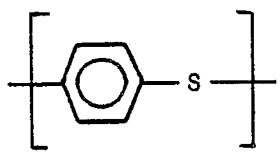

Such polyphenylene sulfides have high melting points, outstanding chemical resistance, thermal stability and non-flammability. The polymer is characterized by high stiffness and good retention of mechanical properties at elevated temperature.

The polyetherimides can be obtained by any of the methods well known to those skilled in the art including the reaction of any aromatic bis(ether anhydrides) of the formula:

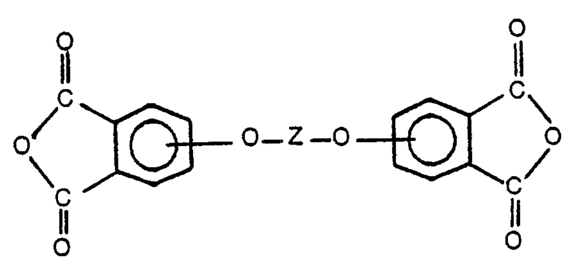

where Z is as defined hereinbefore with an organic diamine of the formula:

$$H_2N-R-NH_2$$

where R is as defined hereinbefore.

Aromatic bis(ether anyhdride)s of the above formula include, for example, 2,2-bis[4-(2,3-dicarboxyphenoxy)phenyl]-propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxyphenoxy) benzene dianhydride; 4,4'-bis(2,3-dicarboxyphenoxy) benzophenone dianhydride; 4,4'-bis(2,3-dicarboxyphenoxy)diphenyl sulfone dianhydride; 2,2-bis[4-(3,4-dicarboxyphenoxy)phenyl] propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)-benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl-2,2-propane dianhydride; and mixtures of such dianhydrides.

In addition, aromatic bis(ether anhydride)s also included by the above formula are shown by Koton, M. M.; Florinski, F. S.; Bessonov, M. I.; Rudakov, A. P. (Institute of Heteroorganic compounds, Academy of Sciences, U.S.S.R), U.S.S.R. 257,010, Nov. 11, 1968, Appl. May 3, 1967. In addition, dianhydrides are shown by M. M. Koton, F. S. Florinski, Zh Org. Khin, 4(5), 774 (1969).

Organic diamines of the above formula include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenylsulfone, 4,4'-diaminodiphenyl ether, 1,5-diaminonaphthalene, 3,3'-dimenthylbenzidine, 3,3'-dimethoxybenzidine, 2,4-bis(β-amino-t-butyl)toluene, bis(p-β-amino-t-butylphenyl)ether, bis(p-β-methyl-o-aminopentyl)benzene, 1,3-diamino-4-isopropylbenzene, 1,2-bis(3-aminopropoxy)ethane, m-xylylenediamine, p-xylylenediamine, 2,4-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylopropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl)sulfide, N-methyl-bis (3-aminopropyl)amine, hexamethylenediamine, heptamethylenediamine, nonamethylenediamine, decamethylenediamine, bis(3-aminopropyl)tetramethyldisiloxane and bis(4-aminobutyl)tetramethyldisiloxane.

In general, the reactions can be advantageously carried out employing well-known solvents, e.g., o-dichlorobenzene, m-cresol/toluene, etc. in which to effect interaction between the dianhydrides and the diamines, at temperatures of from 100 to 250°C. Alternatively, the polyetherimides can be prepared by melt polymerization of any of the above dianhydrides with any of the above diamine compounds while heating the mixture of the ingredients at elevated temperatures with concurrent intermixing. Generally, melt polymerization temperatures between 200° to 400°C. and preferably 230° to 300°C. can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscosity [η] greater than 0.2 deciliters per gram, preferably 0.35 to 0.60, or 0.7 deciliters per gram or even higher when measured in m-cresol at 25°C.

Included among the many methods of making the polysulfides are those disclosed in U.S. 3,354,129 and 2,513,188, in G.B. 962,941, and in the Kirk-Othmer Encyclopedia of Chemical Technology, Vol. 16, pp. 253—272, John Wiley & Sons (1968).

As is described in U.S. 3,354,129, aromatic polysulfides can be prepared by contacting a polyhalo-substituted cyclic compound containing unsaturation between adjacent ring atoms and an alkali metal sulfide in the presence of a polar organic compound. The resulting polymer contains the cyclic structure of the polyhalo-substituted compound coupled in repeating units through a sulfur atom. Aromatic polysulfides can also be manufactured as described in U.S. 2,513,188 by reacting mixtures of p-dichlorobenzene and 1,2,4-trichlorobenzene with sulfur and metal sulfide at fusion temperatures. The polymers can also be manufactured by the method described in G.B. 962,941 wherein metal salts of halothiophenols are heated at a polymerizing temperature.

According to U.S. 3,843,614, aliphatic polysulfide polymers can be made by reacting sodium polysulfide with a reactive halide such as ethylene dichloride. Further methods are set forth in the Kirk-Othmer Encyclopedia of Chemical Technology previously mentioned in the articles cited therein.

In accordance with the present invention, blends of a polyetherimide and a polysulfide are comprising from 10 to 90% by weight, polyetherimide and from 90 to 10%, by weight polysulfide are included within the scope of the invention. By controlling the proportions of the polyetherimide and polysulfide relative to each other, blends having certain predetermined properties which are improved over those of polysulfide component alone may be readily obtained. In general, blends of polyetherimides and polysulfides have a good appearance with a dark opaque surface, a relatively high flexural strength regardless of the blend composition and adequate physical properties, particularly at a relatively low amounts of polysulfide relative to the polyetherimide. In addition, the polysulfide component of the blends facilitates the inclusion of fillers or reinforcements such as glass as well as other polymeric materials.

It is contemplated that the polyetherimide-polysulfide blends of the present invention may also include additive materials such as fillers, stabilizers, plasticizers, flexibilizers, surfactant agents, pigments, dyes, reinforcements, flame retardants and diluents in conventional amounts. It is also contemplated that the blends of the invention may include two or more polyetherimides with one or more polysulfides or two or more polysulfides in combination with one or more polyetherimides.

Methods for forming polyetherimide-polysulfide blends may vary considerably. Prior art blending techniques are generally satisfactory. A preferred method comprises blending the polymers and additives such as reinforcements in powder, granular or filamentous form, extruding the blend, and chopping the

extrudate into pellets suitable for molding by means conventionally used to mold normally solid thermoplastic compositions.

The polyetherimide-polysulfide blends of the present invention have application in a wide variety of physical shapes and forms, including the use as films, molding compounds, coatings, etc. When used as films or when made into molded products, these blends, including laminated products prepared therefrom, not only possess good physical properties at room temperature but they retain their strength and excellent response to workloading at elevated temperatures for long periods of time. Films formed from the blends of this invention may be used in application where films have been used previously. Thus, the blends of the present invention can be used in automobile and aviation applications for decorative and protective purposes, and as high temperature electrical insulation for motor slot liners, transformers, dielectric capacitors, coil and cable wrappings (form wound coil insulation for motors), and for containers and container linings. The blends can also be used in laminated structures where films or solutions of the blends are applied to various heat-resistant or other type of materials such as asbestos, mica, glas fiber and the like, the sheets superimposed one upon the other, and thereafter subjecting the sheets to elevated temperatures and pressures to effect flow and cure of the resinous binder to yield cohesive laminated structures. Films made from the subject polyetherimide-polysulfide blends can also serve in printed circuit applications.

Alternatively, solutions of the blends herein described can be coated on electrical conductors such as copper, aluminum, etc. and thereafter the coated conductor can be heated at elevated temperatures to remove the solvent and provide a continuous resinous composition thereon. If desired, an additional overcoat may be applied to such insulated conductors including the use of polymeric coating, such as polyamides, polyesters, silicones, polyvinylformyl resins, epoxy resins, polyimides, polytetrafluoroethylene, etc. The use of the blends of the present invention as overcoats on other types of insulation is not precluded.

Other applications which are contemplated for these blends include their use as binders for asbestos fibers, carbon fibers, and other fibrous materials in making brake linings. In addition, molding compositions and molded articles may be formed from the polymeric blends of the invention by incorporating such fillers as asbestos, glass fibers, talc, quartz, powder, finely divided carbon, silica and the like into the blends prior to molding. Shaped articles may be formed under heat, or under heat and pressure, in accordance with practices well-known in the art.

The following examples illustrate specific polyetherimide-polysulfide blends in accordance with the present invention. It should be understood that the examples are given for the purpose of illustration and do not limit the invention. In the examples, all parts and percentages are by weight unless otherwise specified.

## Example I

A polyetherimide-polysulfide blend according to the invention was prepared, molded into test specimens and then tested for various physical properties.

The polyetherimide was prepared from the reaction product of essentially equimolar amounts of 2,2-bis[4-(3,4-dicarboxy phenoxy)phenyl] propane dianhydride and m-phenylene diamine produced at elevated temperature of 250° to 300°C. and under nitrogen atmosphere. The polymer was extruded at about 300°C. to form a strand and mechanically chopped into pellets. A test specimen injection molded from the pellets was tested for physical properties and the results are set forth in the following Table.

About 90 parts of the above polyetherimide were mixed with about 10 parts of polyphenylene sulfide resin powder sold commercially under the trade name Ryton® P—4 by Phillips Chemical Company. The polymer mixture was then extruded in a 28 mm. twin screw Werner & Pfleiderer extruder having a temperature profile varying from about 310 to 327°C. The resulting extrudate was comminuted into pellets and the pellets injection molded at about 329°C. into test specimens. Impact strengths of these specimens were measured according to the notched and unnotched Izod test and the results are set forth in the Table. The heat deflection temperature, flexural strength, flexural modulus, and tensile properties of the blend were also measured and are given in the Table.

## Example II

The procedure of example I was repeated with the exception that about 70 parts of the polyetherimide were blended with about 30 parts of polysulfide to produce the blend according to the invention. The results of the notched and unnotched Izod impact test, as well as the heat deflection temperature, flexural strength, flexural modulus and tensile properties for the blend are detailed in the Table.

## Example III

The procedure of example I was repeated with the exception that about 50 parts of the polyetherimide were blended with about 50 parts of polysulfide to produce the blend according to the invention. The results of the notched and unnotched Izod impact test, as well as the heat distortion temperature, flexural strength, flexural modulus and tensile properties for the blend are detailed in the Table.

## Example IV

The procedure of example I was repeated with the exception that about 30 parts of the polyetherimide

were blended with about 70 parts of polysulfide to produce the blend according to the invention. The results of the notched and unnotched Izod impact test, as well as the heat deflection temperature, flexural strength, flexural modulus and tensile properties for the blend are detailed in the Table.

Example V

The procedure of example I was repeated with the exception that about 10 parts of the polyetherimide were blended with about 90 parts of polysulfide to produce the blend according to the invention. In addition, the molding temperature was about 288°C. The results of the notched and unnotched Izod impact test, as well as the heat deflection temperature, flexural strength, flexural modulus and tensile properties for the blend are detailed in the Table.

TABLE I

| Example | % Poly-etherimide | % Poly-sulfide | Izod Impact, 3.2 mm bar N.m/cm (ft lbs/in)[1] Notched | Unnotched | HDT°C @ 1.82 MPa[2] | Initial Modulus daN/mm² (PSI × $10^5$) | flexural Properties[3] Strength @ 6.2 mm Defl. daN/mm² (PSI × $10^4$) | Ultimate Strength daN/mm² (PSI × $10^4$) | Tensile Properties[4] % | Yield daN/mm² (PSI × $10^4$) | % | Failure daN/mm² (PSI × $10^4$) |
|---|---|---|---|---|---|---|---|---|---|---|---|---|
| I | 100 | 0 | 0.587 (1.1) | 14.145 (26.5) | 186 | 346.07 (5.02) | 14.47 (2.10) | 17.30 (2.51) | 17.6 | 10.34 (1.50) | 36 | 8.48 (1.23) |
| | 90 | 10 | 0.373 (0.7) | 10.89 (20.4) | 158 | 330.22 (4.79) | 13.71 (1.99) | 15.30 (2.22) | 22 | 9.99 (1.45) | 35 | 7.99 (1.16) |
| II | 70 | 30 | 0.213 (0.4) | 7.68 (14.4) | 118 | 355.04 (5.15) | 13.85 (2.01) | 15.23 (2.21) | — — | — — | 8 | 7.10 (1.03) |
| III | 50 | 50 | 0.160 (0.3) | 7.81 (14.6) | 98 | 330.22 (4.79) | 13.03 (1.89) | 13.85 (2.01) | — | — | 8 | 7.51 1.09 |
| | | | | 2.89 (5.4) | | | | | | | | |
| IV | 30 | 70 | 0.107 (0.2) | 2.35 (4.4) | 91 | 385.37 (5.59) | — | 10.82 (1.57) | — | — | 5 | 5.55 (0.80) |
| V | 10 | 90 | 0.107 (0.2) | 1.34 (2.5) | 89 | 336.42 (4.88) | — | 4.89 (0.710) | — | — | 4 | 4.89 (0.710) |

1. Tested according to ASTM method D—256. Unnotched bars contain notch on back side.
2. Tested according to ASTM method D—648 using a 3.2 mm bar.
3. Tested according to ASTM method D—790 using a 3.2 mm bar at a 1.27 mm/min crosshead speed.
4. Tested according to ASTM method D—638 using a Type 1 bar with a 5.08 mm/min crosshead speed.

From the above results, it is apparent in terms of the blending range profile that the notched Izod impact strength values decrease fairly rapidly as more polysulfide is included up to about at 50:50 blend ratio of the two components. Beyond the 50:50 blend ratio, in terms of increasing polysulfide content, the values for the notched Izod decrease very gradually. These data along with the unnotched data indicate a phase inversion at about a 50:50 blend composition.

The change in heat deflection temperature values with the change in composition for the blends also indicates that a phase inversion occurs around 50:50 blend level. While the published heat deflection value for the polysulfide used is in excess of 260°C., interestingly at a blend composition containing a major proportion of polysulfide, the heat deflection temperature for the blend is significantly lower than that for the polysulfide component alone. For example, the blend of about 90% polyusulfide has a heat deflection temperature much lower at about 89°C than the published value for the polysulfide material. This difference may be attributed to the 40% glass contained in the pure Ryton R—4 polysulfide which stiffens the crystalline resin matrix significantly.

From an examination of the flexural properties of the blends over the range of compositions, it is apparent that the flexural modulus remains relatively constant regardless of the blend compositions and the flexural strength of the blends, although lower than that of the polyetherimide component, gradually decreases with increasing content of polysulfide up to the 50:50 blend ratio where the flexural strength decreases rapidly, again probably due to a phase inversion at a 50:50 blend ratio. Tensile strength and elongation for the blends are generally better with a major proportion of polyetherimide component.

From the above, it may be concluded that the blends of the invention, particularly those having a minor proportion of polysulfide, e.g., about 10% polysulfide, have comparable physical properties to that of the polyetherimide component with the exception of the heat deflection temperature. Thus, the polysulfide component of the blends could be used as a compatibilizing agent when forming blends of three or more components. In addition, in view of the physical properties of polysulfides, blends containing a minor proportion, polysulfide, e.g., from about 10 to 40% polysulfide, may have excellent properties in terms of heat deflection temperature, tensile and flexural properties.

Substitution and other polyetherimides and/or other polysulfides for the polyetherimide and/or polysulfides of the blends of the above examples may result in the formulation of polyetherimide-polysulfide polymer blends having similar characteristics.

## Claims

1. A composition comprising a blend of

(a) 90 to 10% by weight of a polysulfide of the following formula:

$$-\!\!\left[ R_1-S_n \right]\!\!-$$

where $R_1$ is a divalent aliphatic or aromatic radical and n is a number from 1 to 5; and

(b) 10 to 90% by weight of a polyetherimide of the following formula:

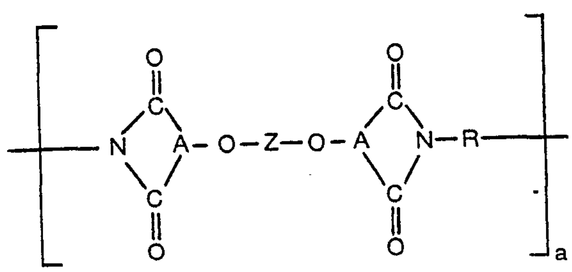

wherein a represents a whole number in excess of 1, the group

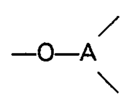

is selected from:

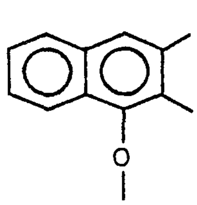

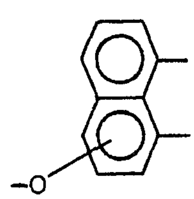

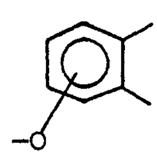

Z is a member of the class consisting of (1)

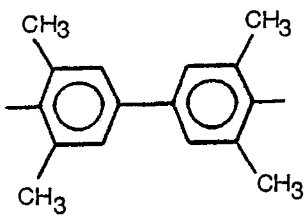
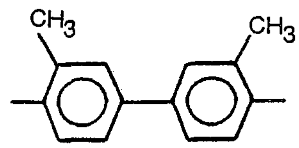
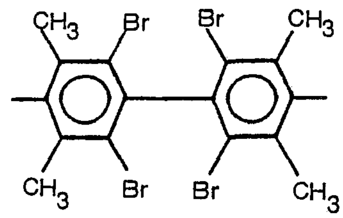

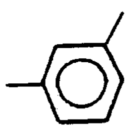
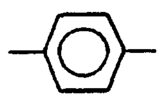
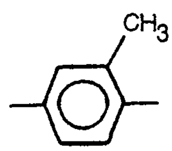
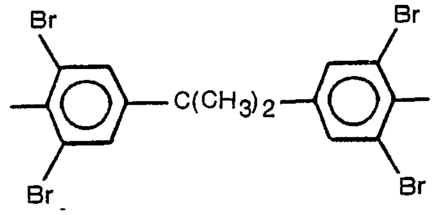

and (2) divalent organic radicals of the general formula:

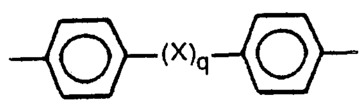

where X is a member selected from the class consisting of divalent radicals of the formulas:

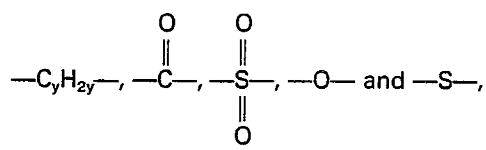

where q is 0 or 1, y is a whole number from 1 to 5,

and R is a divalent organic radical selected from the class consisting of (a) aromatic hydrocarbon radicals having from 6—10 carbon atoms and halogenated derivatives thereof, (b) alkylene radicals and cycloalkylene radicals having from 2—20 carbon atoms, $C_{(2-8)}$ alkylene terminated polydiorgano-siloxane, and (c) divalent radicals included by the formula:

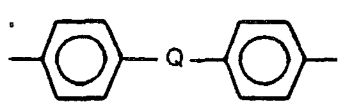

where Q is a member selected from the class consisting of:

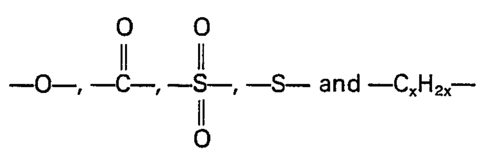

where x is a whole number from 1 to 5 inclusive.

2. A composition in accordance with claim 1 wherein $R_1$ of the polysulfide is aromatic and selected from phenylene, biphenylene, naphthylene, oxydiphenyl or lower alkyl, lower alkoxy or halogen substituted derivatives thereof, and n is one.

3. A composition in accordance with claim 1 wherein the polysulfide is polyphenylene sulfide.

4. A composition in accordance with claim 1 wherein the polyetherimide is of the formula:

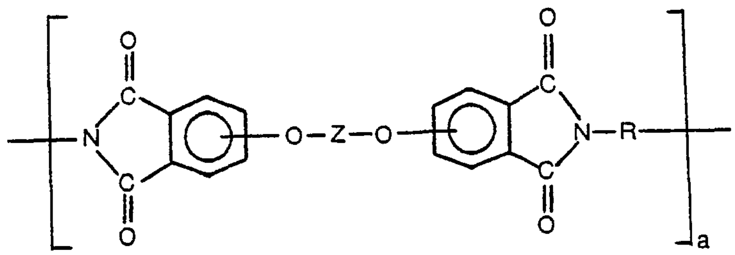

and the divalent bonds of the —O—Z—O radical are in the 3,3'; 3,4'; 4,3' or the 4,4' position.

5. A composition in accordance with claim 4 wherein Z is:

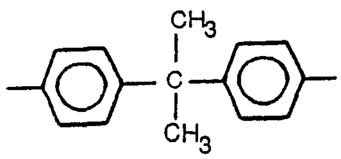

and R is selected from:

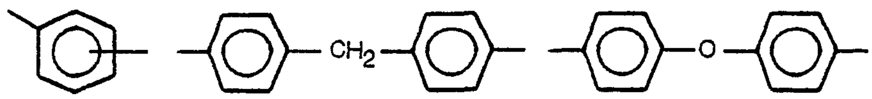

6. A composition in accordance with claim 5 wherein the polyetherimide is of the formula:

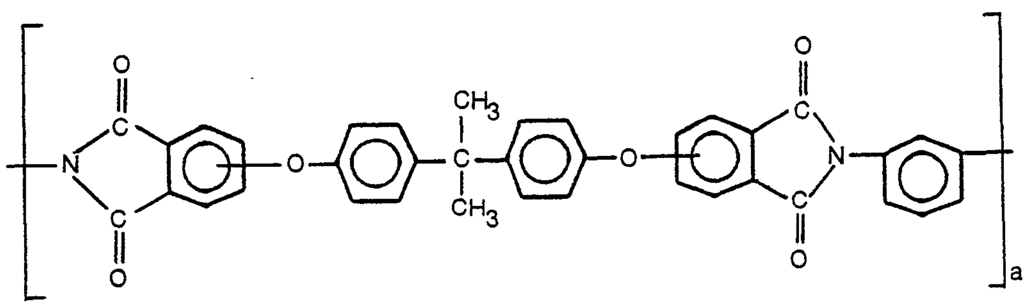

**Patentansprüche**

1. Zusammensetzung enthaltend eine Mischung aus

(a) 90 bis 10 Gew.-% eines Polysulfids der folgenden Formel

$$-\!\!\left[R_1—S_n\right]\!\!-$$

worin $R_1$ ein zweiwertiger aliphatischer oder aromatischer Rest und n eine Zahl von 1 bis 5 ist; und

(b) 10 bis 90 Gew.-% eines Polyätherimids der folgenden allgemeinen Formel

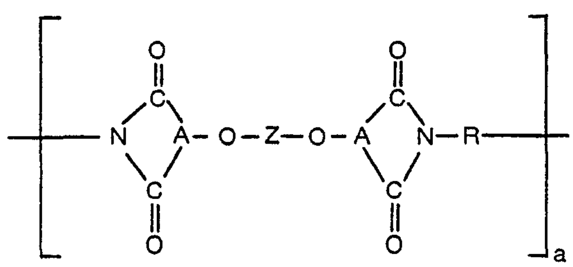

worin a eine ganze Zahl größer als 1 darstellt, die Gruppe

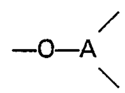

ausgewählt ist aus:

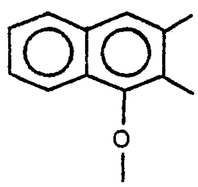

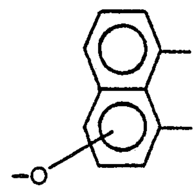

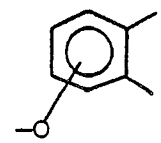

Z ein Glied ist aus der Klasse bestehend aus (1)

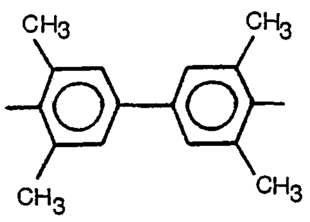

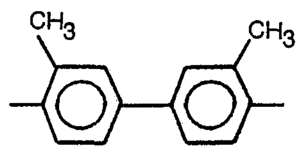

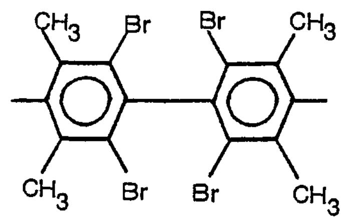

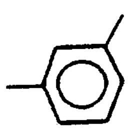

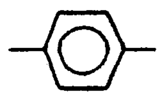

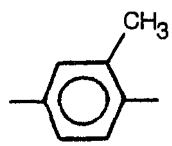

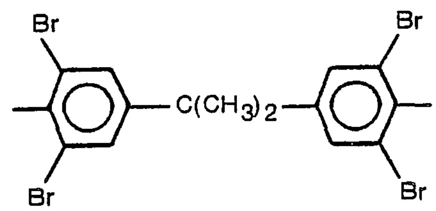

und (2) zweiwertigen organischen Resten der allgemeinen Formel

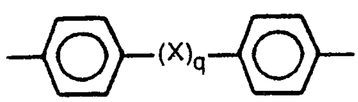

worin X eine Zahl ist ausgewählt aus der Klasse bestehend aus zweiwertigen Resten der Formeln

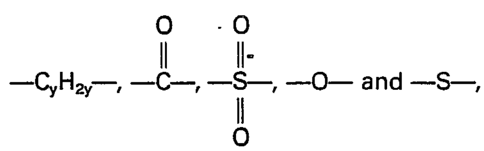
and

worin q 0 oder 1 ist, y eine ganze Zahl von 1 bis 5 ist, und R ein zweiwertiger organischer Rest ist ausgewählt aus der Klasse bestehend aus

(a) aromatischen Kohlenwasserstoffresten mit 6 bis 10 Kohlenstoffatomen und halogenierten Derivaten derselben,

(b) Alkylenresten und Cycloalkylenresten mit 2 bis 20 Kohlenstoffatomen, Polydiorganosiloxan mit $C_{(2-8)}$ Alkylenendgruppe und

(c) zweiwertigen Resten, die von der Formel

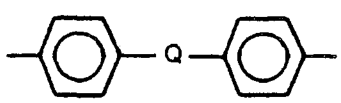

umfaßt werden, worin Q ein Glied ist ausgewählt aus der Klasse bestehend aus

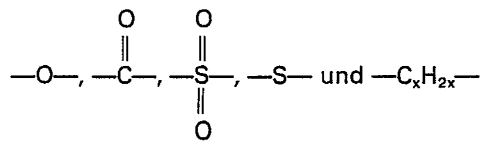

worin x eine ganze Zahl von 1 bis 5 einschließlich ist.

2. Zusammensetzung nach Anspruch 1, worin $R_1$ des Polysulfids aromatisch ist und ausgewählt ist aus Phenylen, Bisphenylen, Naphthylen, Oxydiphenyl oder niederem Alkyl, niederem Alkoxy oder halogensubstituierten Derivaten derselben und n gleich 1 ist.

3. Zusammensetzung nach Anspruch 1, worin das Polysulfid Polyphenylensulfid ist.

4) Zusammensetzung nach Anspruch 1, worin das Polyätherimid der Formel

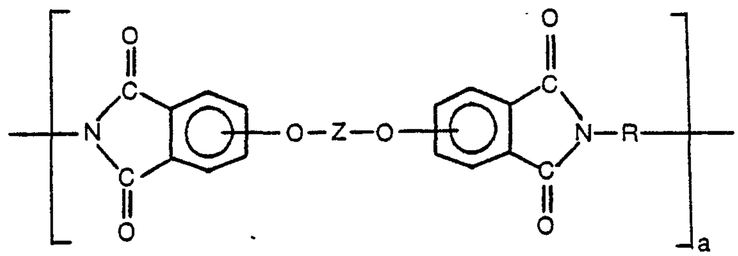

entspricht und die zweiwertigen Bindungen des —O—Z—O— Restes in der 3,3'; 3,4'; 4,3' oder 4,4'-Stellung sind.

5. Zusammensetzung nach Anspruch 4, worin Z

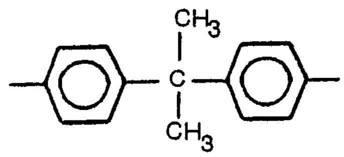

ist und R ausgewählt ist aus

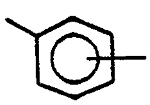 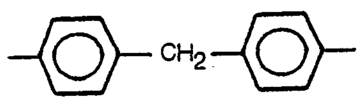 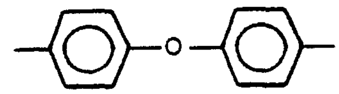

6. Zusammensetzung nach Anspruch 5, worin das Polyätherimid der folgenden Formel entspricht

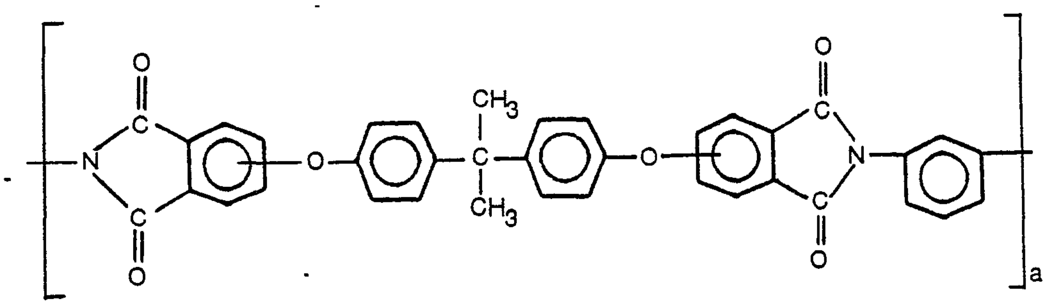

**Revendications**

1. Une composition comprenant un mélange de

(a) 90 à 10% en poids d'un polysulfure de formule suivante:

$$-[R_1-S_n]-$$

dans laquelle $R_1$ est un radical divalent aliphatique ou aromatique et n est un nombre de 1 à 5; et

(b) 10 à 90% en poids d'un polyétherimide de formule suivante:

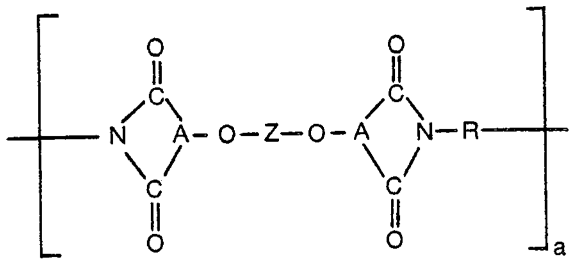

dans laquelle a représente un nombre entier supérieur à 1, le groupe

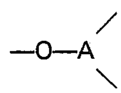

est choisi parmi

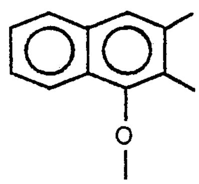 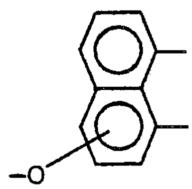 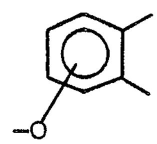

Z est un composant de la catégorie constituée par (1)

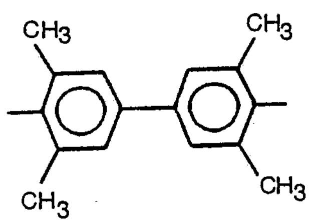 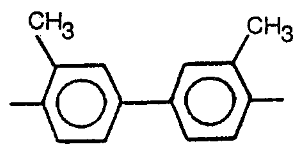 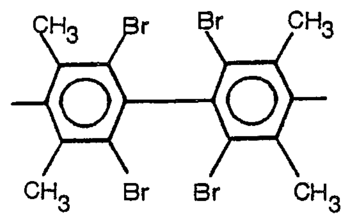

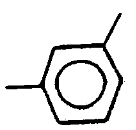 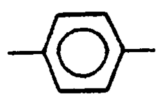 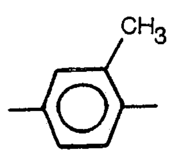 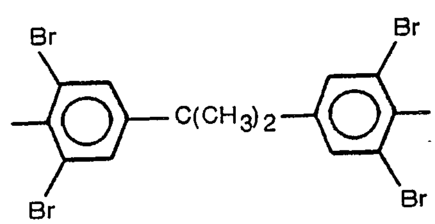

et (2) les radicaux organiques divalents de formule générale

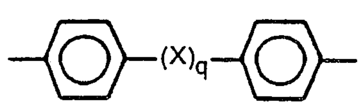

dans laquelle X est un composant choisi dans la catégorie constituée par les radicaux divalents de formule:

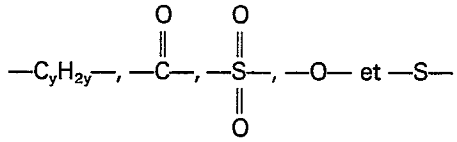

où q est 0 ou 1, y est un nombre entier de 1 à 5, et R est un radical organique divalent choisi dans la catégorie constituée par (a) les radicaux hydrocarbonés aromatiques ayant de 6 à 10 atomes de carbone et leurs dérivés halogénés, (b) les radicaux alkylènes et les radicaux cycloalkylènes ayant de 2 à 20 atomes de carbone, un polydiorganosiloxane à terminaison alkylène en $C_{(2-8)}$ et (c) les radicaux divalents répondant à la formule

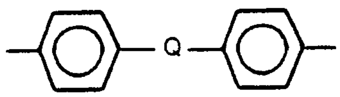

dans laquelle Q est un composant choisi dans la catégorie constituée par

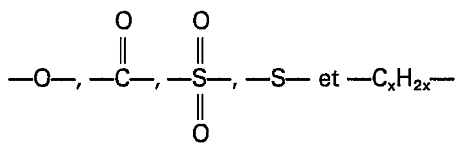

dans laquelle x est un nombre entier de 1 à 5 inclusivement.

2. Une composition selon la revendication 1 dans laquelle $R_1$ du polysulfure est aromatique et est choisi parmi phénylène, biphénylène, naphtylène, oxydiphényle, ou leurs dérivés substitués par un alkyle inférieur, un alcoxy inférieur ou un halogène et n est 1.

3. Une composition selon la revendication 1 dans laquelle le polysulfure est le poly(sulfure de phénylène).

4. Une composition selon la revendication 1 dans laquelle le polyétherimide a pour formule:

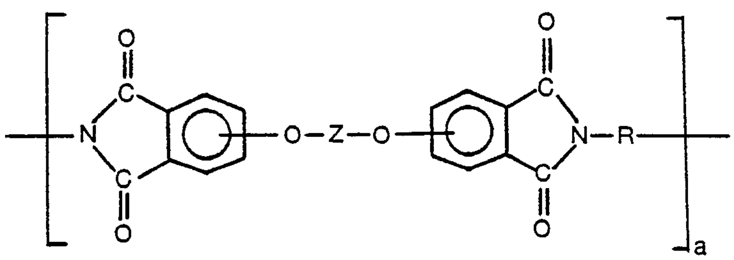

et les liaisons divalentes du radical —O—Z—O sont dans la position 3,3'; 3,4'; 4,3' ou 4,4'.

5. Une composition selon la revendication 4 dans laquelle Z est

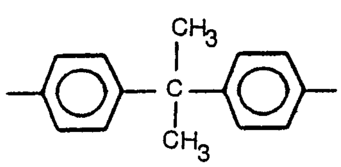

et R est choisi parmi:

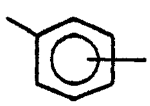
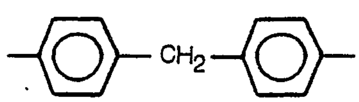
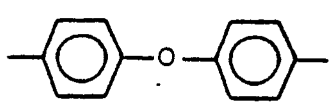

6. Une composition selon la revendication 5 dans laquelle le polyétherimide a pour formule: